Europäisches Patentamt

European Patent Office

Office européen des brevets

(11) Publication number: **0 260 114 B1**

(12) **EUROPEAN PATENT SPECIFICATION**

(45) Date of publication of patent specification: **30.12.92**  (51) Int. Cl.⁵: **G11B 11/10**

(21) Application number: **87307939.6**

(22) Date of filing: **08.09.87**

(54) **Opto-magnetic signal reproducing apparatus for reading, by differential detection using a magneto-optical effect, information magnetically recorded on a record medium.**

(30) Priority: **12.09.86 JP 215089/86**

(43) Date of publication of application:
**16.03.88 Bulletin 88/11**

(45) Publication of the grant of the patent:
**30.12.92 Bulletin 92/53**

(84) Designated Contracting States:
**DE FR GB IT NL**

(56) References cited:
**US-A- 4 599 714**

**PATENT ABSTRACTS OF JAPAN, vol. 9, no. 243 (P-392)[1966], 20th September 1985; & JP-A-60 95 744**

**PATENT ABSTRACTS OF JAPAN, vol. 9, no. 327 (P-415)[2050], 21st December 1985; & JP-A-60 151 855**

**PATENT ABSTRACTS OF JAPAN, vol. 7, no. 23 (P-171)[1168], 29th January 1983; & JP-A-57 176 550**

(73) Proprietor: **CANON KABUSHIKI KAISHA**
**30-2, 3-chome, Shimomaruko, Ohta-ku Tokyo(JP)**

(72) Inventor: **Koyama, Osamu**
**309-2 Idanakanomachi Nakahara-ku Kawasaki-shi Kanagawa-ken(JP)**

(74) Representative: **Beresford, Keith Denis Lewis et al**
**BERESFORD & Co. 2-5 Warwick Court High Holborn**
**London WC1R 5DJ(GB)**

Rank Xerox (UK) Business Services

## Description

BACKGROUND OF THE INVENTION

Field of the Invention

The present invention relates to an opto-magnetic signal reproducing system for reading, by a magneto-optical effect, information recorded on an opto-magnetic record medium.

Related Background Art

The opto-magnetic signal reproducing apparatus magnetically records information by utilizing local temperature rise of a magnetic film by spot irradiation of a laser beam and reproduces the information by a magneto-optical effect, and it is a large capacity memory which is erasable and rewritable.

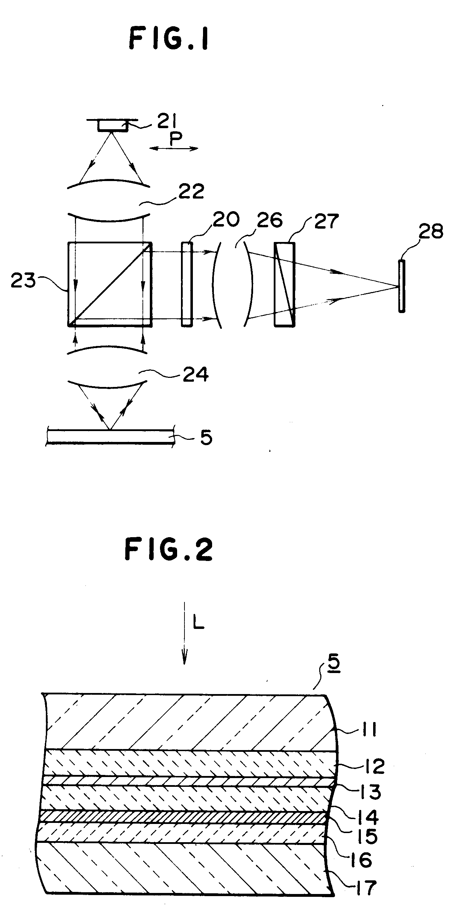

Fig. 1 shows an example of a conventional opto-magnetic signal reproducing apparatus and illustrates configuration and principle of signal reproduction. In Fig. 1, numeral 21 denotes a semiconductor laser, numeral 22 denotes a collimater lens numeral 23 denotes a polarization beam splitter, numeral 24 denotes an objective lens, numeral 5 denotes an opto-magnetic record medium, numeral 26 denotes a focusing lens, numeral 27 denotes an analyzer, numeral 28 denotes a photo-detector and numeral 20 denotes a phase shifter. Assuming that a P polarization plane is in a direction P and a direction of polarization of the semiconductor laser 21 is in the P polarization direction, a light beam emitted from the semiconductor laser 21 is collimated by the collimater lens 22 and directed to the polarization beam splitter 23. A high C/N signal is produced when to $t_p^2 \sim 70\%$ and $r_s^2 \sim 100\%$ where $t_p$ is an amplitude transmission rate of a P polarization component for the polarization beam splitter 23 and $r_s$ is an amplitude reflection rate of an S polarization component. The collimated light beam passed through the polarization beam splitter 23 is focused by the objective lens 24 on the opto-magnetic record medium 5 as a fine spot.

The opto-magnetic record medium 5 is constructed as shown in a sectional view of Fig. 2, in which numerals 11 and 17 denote transparent substrates, numerals 12 and 14 denote dielectric multi-layer films, numeral 13 denotes a magnetic film, numeral 15 denotes a metal reflection film and numeral 16 denotes a protective film.

The light beam is directed in a direction L and has a polarization plane thereof rotated oppositely in accordance with a direction of magnetization (magnetic domain) of a spot irradiated area (magneto-optic Kerr effect), and a Kerr rotation angle is amplified by the dielectric multi-layer films 12 and 14 and the metal reflection film 15. A tracking guide groove is usually formed in the transparent substrate 11 although it is omitted in Fig. 2.

The light reflected by the opto-magnetic record medium 5 is collimated by the objective lens 24 of Fig. 1 and reflected by the polarization beam splitter 23. Thus, an apparent Kerr rotation angle is increased by a ratio of $r_p^2$ ( $= 1 - t_p^2$) and $r_s^2$. Then, the light is separated to a polarization component by the analyzer 27 through the focusing lens 26, and it is directed to the photo-detector 28 as a signal light.

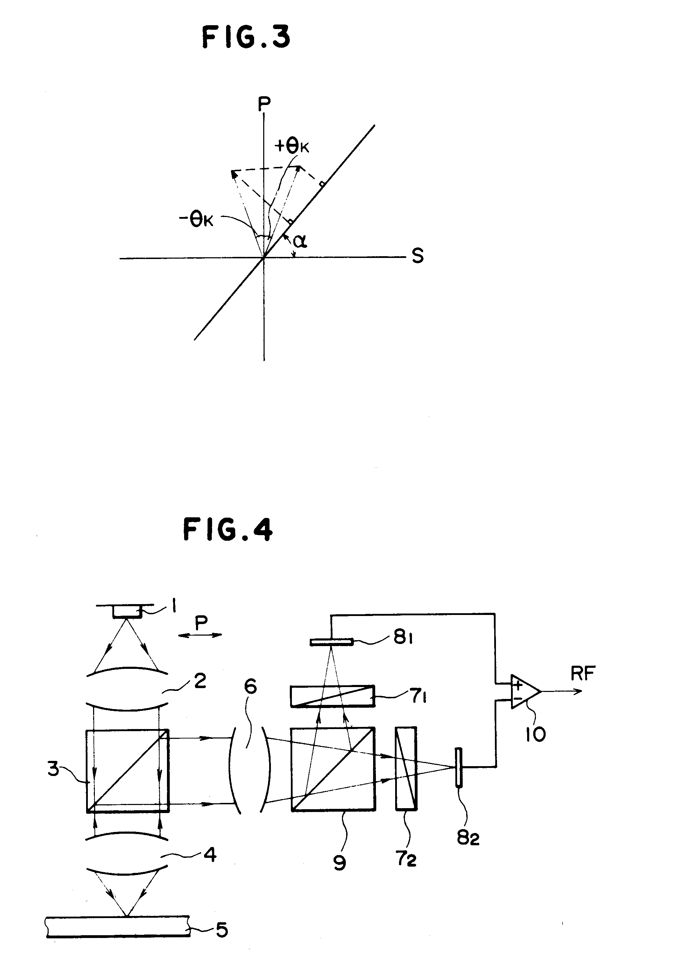

The reflected light directed to the analyzer has the polarization plane thereof rotated by $\pm \theta k$ shown in Fig. 3 in accordance with the magnetic domain on the medium. Accordingly, if a transmission axis direction is an angle $\alpha$ with respect to the S polarization direction, a light intensity detected by the photo-sensor 28 is square of normal projection component of the amplitued to the analyzer transmission axis, and a signal intensity-modified in accordance with the magnetic domain is read out. The signal light I is represented by

$$I \propto R^2 = (\sin^2 \alpha \ + \ \theta k \sin 2\alpha) \qquad (1)$$

where R is a Fresnel reflection factor of the opto-magnetic medium. A second term of the formula (1) represents the opto-magnetic signal.

There is usually a phase difference between the P polarization beam and the S polarization beam reflected by the opto-magnetic record medium. Thus, strictly speaking, a linear polarization beam shown in Fig. 3 is not produced but an elliptic polarization beam is produced. When an ellipse rate is high, a C/N ratio (an S/N ratio in a carrier wave band) of a reproduced signal may be lowered. To prevent it, Japanese Patent Appln. Laid Open No. 20342/1985 proposed to insert a phase shifter as shown in Fig. 1 to reduce the phase difference.

Once the other hand, in another approach to improve the C/N ratio of the reproduced signal, the reflection light from the opto-magnetic record medium is split by a half-mirror and the split light beams are differentially detected through analyzers having different transmission axis directions. Thus, the signal light I'

is represented by

$$I' \propto R^2 \, \theta_K \sin 2\alpha \qquad (2)$$

and the first term of the formula (1) is eliminated and a high C/N ratio signal is produced. Such a differential detection is disclosed in USP 4,558,440 issued on Dec. 10, 1985, Figs. 8A and 8B and specification column 9, line 29- column 10, line 25, USP 4,561,032 issued on Dec. 24, 1985, Figs. 8A and 8B and specification column 9, line 26 ~ column 10, line 23; USP 4,569,035 issued on Feb. 4, 1986, Figs. 7A and 7B and specification column 5, lines 9 ~ 24; and USP 4,599,714 issued on Jul. 8, 1986, Fig. 1 and specification column 1, lines 23 ~ 51.

However, the half-mirror for splitting the light beam usually has a property to cause a phase difference in both the transmitted light and the reflected light. Accordingly, in the differential detection, even if the phase difference by the record medium is compensated by the phase shifter described in the above patent application, a phase difference is caused in both the two split light beam and a difference is caused between opto-magnetic signal levels. As a result, the C/N ratio is lowered.

European patent application 0141679 discloses a magneto-optical memory device which includes a recording medium having a magnetic anisotrophy in a direction perpendicular to the main surface thereof. A semiconductor laser is employed in an optical system of the magneto-optical memory device for reproduction purposes. A beam splitted is disposed in the optical system. A multi coated dielectric thin-film is deposited on the reflection surface of the beam splitter in order to establish a desired relationship between the reflection of the P-polarization and the S-polarization. A smaller proportion of the P-polarization is reflected than the S-polarization, so that the beam acquires a rotation angle greater than the Kerr rotation angle applied to it by the recording medium.

## SUMMARY OF THE INVENTION

According to the present invention there is provided an information reproducing system which comprises means for applyng a light beam polarized in a predetermined direction to an opto-magnetic recording medium in which thin films including at least a magnetic record layer (13) that has information recorded are formed on a transparent substrate (11,17); a half-mirror (9) for splitting the light beam modulated in accordance with the information by a magneto-optic effect into a transmitted light beam and a reflected light beam; optical elements (3,4,6) for directing the modulated light beam to said half-mirror; two analyzers (71,72) having different transmission-axis orientations for transmitting the transmitted and reflected light beams, respectively; two detectors (81,82) for receiving the transmitted and reflected light beams transmitted through said analyzers, respectively; and a reproducing circuit (10) for differentiating outputs of said two detectors to reproduce the information:

characterised in that the following relations are satisfied

$$\delta_S + \delta_M + \delta_Q \sim \eta\pi$$
$$\delta_R = \eta_R\pi$$
$$\delta_T = \eta_T\pi$$

where $\delta_S, \delta_M$ and $\delta_Q$ are phase differences created, between a polarization component of the modulated light beam in a prescribed direction and a polarization component thereof in a direction normal to this prescribed direction, by the transparent substrate (11), the thin films (13) and said optical elements (3,4,6), respectively, $\delta_R$ is a phase difference created, between said polarization component of the reflected light beam in the prescribed direction and said polarization component thereof in the direction normal to this prescribed direction, by said half-mirror (9), $\delta_T$ is a phase difference created, between said polarization component of the transmitted light beam in the prescribed direction and said polarization component therof in the direction normal to this prescribed direction, by said half-mirror (9), and $\eta$, $\eta_R$ and $\eta_T$ are integers.

## BRIEF DESCRIPTION OF THE DRAWINGS

Fig. 1 shows a prior art opto-magnetic signal reproducing apparatus,
Fig. 2 shows a sectional view of a general structure of an opto-magnetic record medium,
Fig. 3 illustrates a principle of detection of an opto-magnetic signal by the apparatus shown in Fig. 1,
Fig. 4 shows one embodiment of an opto-magnetic signal reproducing apparatus of the present invention,

Fig. 5 illustrates polarization of a light beam reflected by the record medium,

Fig. 6 shows a relationship between a phase difference of detected light beams and a carrier level of the opto-magnetic signal,

Figs. 7A and 7B show distributions of phase difference in a substrate of the second medium, and

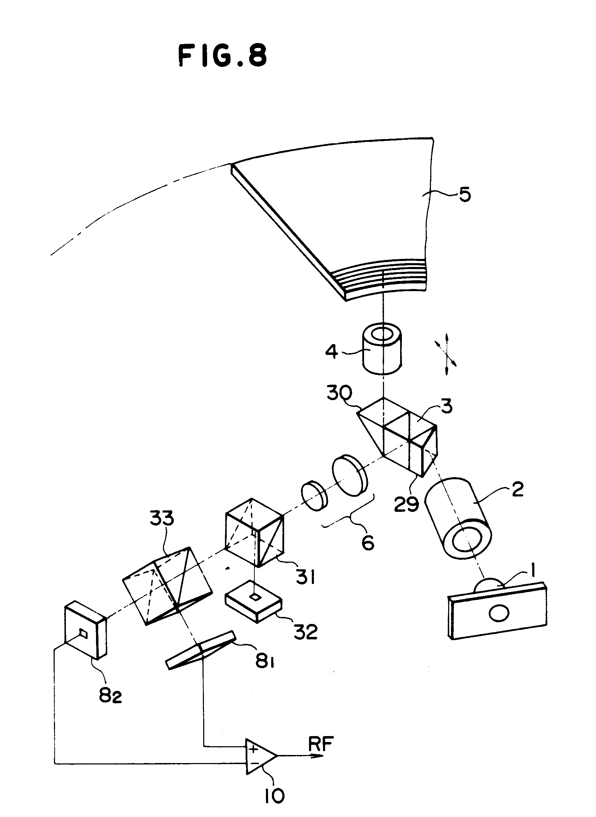

Fig. 8 shows another embodiment of the present invention.

## DETAILED DESCRIPTION OF THE PREFERRED EMBODIMENTS

Fig. 4 shows one embodiment of the opto-magnetic signal reproducing apparatus of the present invention. Numeral 1 denotes a semiconductor laser, numeral 2 denotes a collimater lens, numeral 3 denotes a polarization beam splitter, numeral 4 denotes an objective lens, numeral 5 denotes an opto-magnetic record medium, numeral 6 denotes a focusing lens, numerals $7_1$ and $7_2$ denote analyzers, numerals $8_1$ and $8_2$ denote photo-detectors and numeral 9 denotes a half-mirror.

Transmission axes of the analyzers $7_1$ and $7_2$ make an angle of 90° therebetween, outputs of the photo-detectors $8_1$ and $8_2$ are differentiated by a differential amplifier 10 and a reproduced signal RF is obtained based on a well-known differential detection principle. It is the polarization beam splitter 3 (phase difference $\delta_{PBS}$), multi-layer film (phase difference $\delta_M$) and transparent substrate (phase difference $\delta_S$) made of magnetic material, dielectric material or metal in the opto-magnetic medium 5 which impart the phase difference between P and S polarization beams.

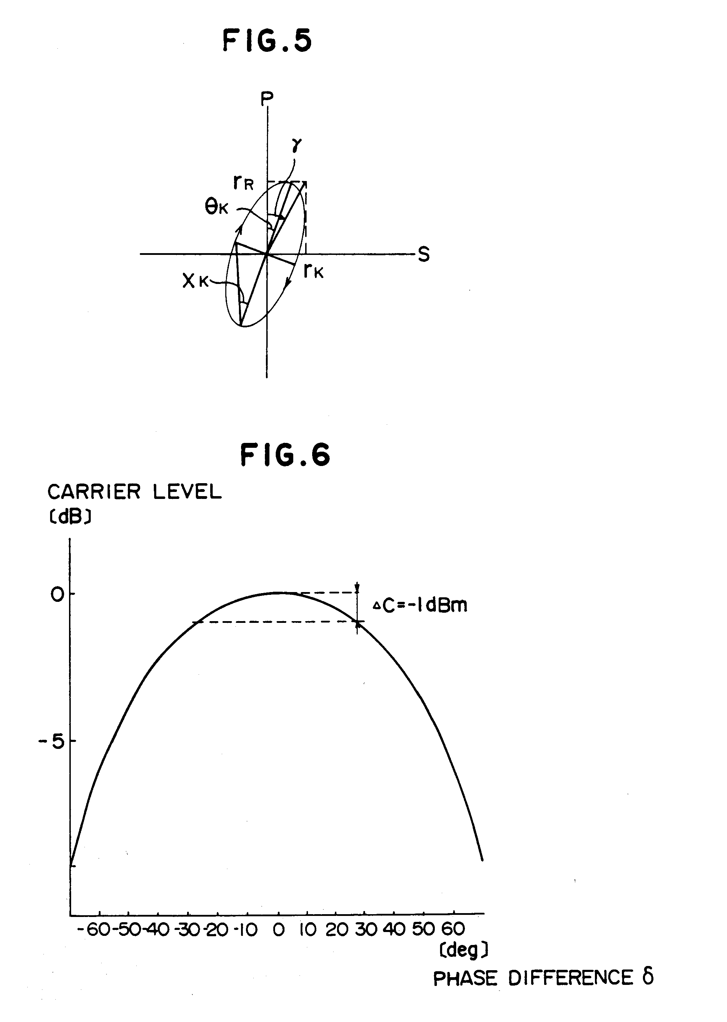

The P polarization light beam irradiated to the opto-magnetic record medium 5 from the semiconductor laser 1 is imparted with the phase difference $\delta_M$ and reflected as an elliptic polarization beam shown in Fig. 5. A Fresnel component $r_R$ (P polarization direction) of an amplitude reflection factor, a Kerr component $r_K$ (S polarization direction), a Kerr rotation angle $\theta$k and a Kerr ellipse factor $x_K$ of the opto-magntic record medium 5 have a relationship of:

$$\frac{r_K}{r_R} = \theta_K + i\, x_K \qquad \cdots (3)$$

Or, $r_K$ and $r_R$ may be expressed by amplitudes and phases A and B as follows.

$$\left. \begin{array}{l} r_K = |r_K|\, e^{iA} \\[2mm] r_R = |r_R|\, e^{iB} \end{array} \right\} \qquad \cdots (4)$$

If $\delta_M \equiv A - B$, then

$$\frac{r_K}{r_R} = \frac{|r_K|}{|r_R|}\, e^{i(A - B)} \equiv \frac{|r_K|}{|r_R|}\, e^{i\delta_M} \qquad \cdots (5)$$

The parameters in Fig. 5 are connected by the following formulas.

EP 0 260 114 B1

$$\theta_K = \frac{|r_K|}{|r_R|} \cos \delta_M$$

$$x_K = \frac{|r_K|}{|r_R|} \sin \delta_M \qquad \qquad \cdots (6)$$

$$\tan \gamma = \frac{|r_K|}{|r_R|}$$

From the formulas (6), the level of the opto-magnetic signal light in the formulas (1) and (2) is given by

$$I \propto R^2 \theta_K \sin 2\alpha \cos \delta_M = I_0 \cos \delta_M \qquad (7)$$

From the formula (7), if the phase difference $\delta_M = 60°$ the level of the opto-magnetic signal light is reduced to one half, and when $\delta_M = 90°$, it cannot be detected.

When the opto-magnetic signal level is observed by the C/N ratio by a spectrum analyzer, a carrier level C is given by

$$C \propto 10 \log I^2 = 20 \log (I_0 \cos \delta) \qquad (8)$$

and the phase difference and the carrier level have a relation shown in Fig. 6. For example, when $\delta_M = 60°$, the carrier level is lowered by 6 dB.

In the present embodiment, the phase difference $\delta_M$ is phase-compensated by the phase difference $\delta_S$ imparted by the substrate and the phase difference $\delta_{PBS}$ imparted by the polarization beam splitter 3. Namely,

$$\delta_M + \delta_S + \delta_{PBS} \sim n\pi \ (n = 0, \pm 1, \pm 2, ...) \qquad (9)$$

If there are n optical elements (including the polarization beam splitter) which imparts phase differences, a total phase difference $\delta_Q$ imparted by the optical system is given by

$$\delta_Q = \sum_{i=1}^{n} \delta_i \qquad (i = 1, 2, \ldots n) \quad \cdots (10)$$

The formula (9) is generally expressed by

$$\delta_M + \delta_S + \delta_Q \sim n\pi \ (n = 0, \pm 1, \pm 2, ...) \qquad (11)$$

If a permissible phase difference converted to the reduction of the carrier level C is 1 dB,

$$(-\tfrac{1}{6} + n)\pi < \delta_M + \delta_S + \delta_Q < (\tfrac{1}{6} + n)\pi \ (n = 0, \pm 1, \pm 2, ...) \qquad (12)$$

From many experiments, it has been proved that there is no practical problem if the phase difference is within the range of the formula (12).

In the present embodiment, a phase difference $\delta_{HM}$ imparted by the half-mirror 9 which is light split means for differential detection is given by

$$\delta_{HM} \sim n\pi \ (n = 0, \pm 1, \pm 2, ...) \qquad (13)$$

The half-mirror usually imparts the phase difference $\delta_{HM}$ in the reflected light (and $\delta_{HM} \sim 0$ in the transmitted light) and a phase difference is created in both the differentially detected light beams. As a result, a difference between the opto-magnetic signal levels is created and a correct signal is not detected. By using the half-mirror which meets the formula (13), the effect by the phase difference in the differential detection is eliminated and a high C/N ratio opto-magnetic signal is reproduced.

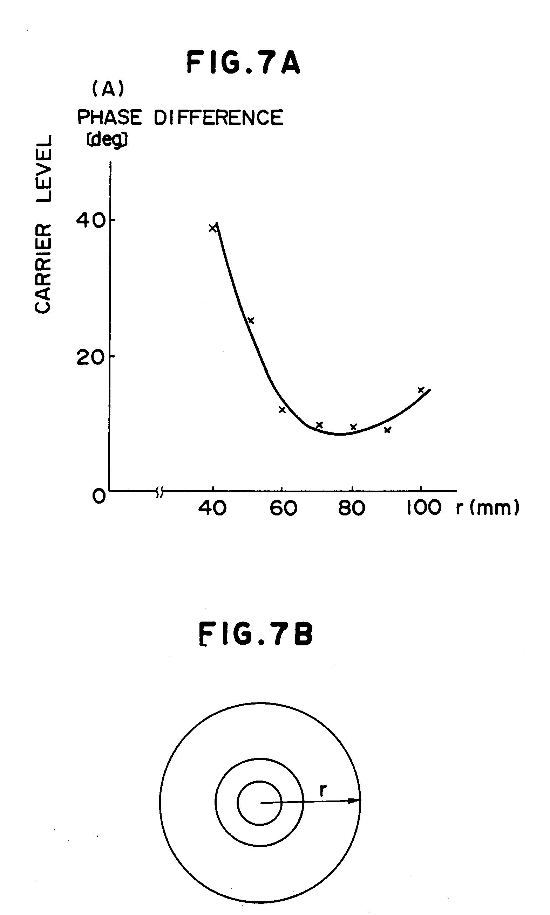

A specific example is explained below. A four-element amorphous magnetic film of GdTbFeCo was formed on a polycarbonate substrate as a record layer to form an opto-magnetic record layer of a structure shown in Fig. 2. It had a Kerr rotation angle $\theta_K$ of 0.7°, and a phase difference $\delta_M$ by the medium of +130°. At a distance r from a center of the polycarbonate substrate shown in a plan view of Fig. 7B, the phase difference imparted to the reproduced light by birefraction distributed as shown in Fig. 7A. A mean value of the phase difference $\delta_S$ by the substrate was approximately ±20° and distributed over +10° ~ +40°. The polarization beam splitter 3 was designed such that it had the P polarization transmission factor $t_P{}^2$ of 70%, S polarization reflection factor $r_S{}^2$ of 98% and the reflected phase difference $\delta_{PBS}$ of +30°, and the phase differences $\delta_M$ and $\delta_S$ created by the multilayer film and the transparent substrate of the opto-magnetic medium cancel each other. Thus, the phase difference $\delta'$ to the half-mirror was given by

$$\delta' = \delta_M + \delta_S + \delta_{PBS} \sim 180°\,{}^{+20°}_{-10°} \quad \cdots \quad (14)$$

The half-mirror 9 was designed such that it had the P polarization transmission factor $t_P{}^2$ of 50%, S polarization transmission factor $t_S{}^2$ of 50% and the reflected light phase difference $\delta_{HM}$ of 180° and the transmitted light phase difference $\delta_{HM'}$ of 0° and there was no substantial reduction of the opto-magnetic signal level. The phase differences $\delta$ imparted by the system to the respective differentially detected lights are:

$$\left.\begin{array}{l} \delta \text{ (reflected light)} = \delta_M + \delta_S + \delta_{PBS} + \delta_{HM} \sim 360°\,{}^{+20°}_{-10°} \\[2ex] \delta \text{ (transmitted light)} = \delta_M + \delta_S + \delta_{PBS} + \boldsymbol{\delta}_{HM'} \sim 180°\,{}^{+20°}_{-10°} \end{array}\right\} \cdots (15)$$

Thus, the phase difference is within the range of the formula (12) even in the differential detection. The reduction of the opto-magnetic signal level by the phase difference is in the order of 0.5 dB when converted to a carrier level and it does not pose a practical problem and a high C/N ratio opto-magnetic signal was reproduced.

The present invention is not limited to the illustrated embodiments but may be modified in various ways. For example, while the reflected light from the medium is detected in the embodiments, the present invention may be applied to an apparatus which reproduces a signal from a transmitted light of the opto-magnetic record medium by utilizing a Farady effect.

**Claims**

1. An information reproducing system which comprises means for applyng a light beam polarized in a predetermined direction to an opto-magnetic recording medium in which thin films including at least a magnetic record layer (13), that has information recorded are formed on a transparent substrate (11,17); a half-mirror (9) for splitting the light beam modulated in accordance with the information by a magneto-optic effect into a transmitted light beam and a reflected light beam; optical elements (3,4,6) for directing the modulated light beam to said half-mirror; two analyzers (71,72) having different transmission-axis orientations for transmitting the transmitted and reflected light beams, respectively; two detectors (81,82) for receiving the transmitted and reflected light beams transmitted through said analyzers, respectively; and a reproducing circuit (10) for differentiating outputs of said two detectors to reproduce the information:

characterised in that the following relations are satisfied

$\delta_S + \delta_M + \delta_Q \sim \eta\pi$

$\delta_R = \eta_R\pi$

$\delta_T = \eta_T\pi$

where $\delta_S, \delta_M$ and $\delta_Q$ are phase differences created, between a polarization component of the modulated light beam in a prescribed direction and a polarization component thereof in a direction normal to this prescribed direction, by the transparent substrate (11), the thin films (13) and said optical elements (3,4,6), respectively, $\delta_R$ is a phase difference created, between said polarization component of the reflected light beam in the prescribed direction and said polarization component thereof in the direction normal to this prescribed direction, by said half-mirror (9), $\delta_T$ is a phase difference created, between said polarization component of the transmitted light beam in the prescribed direction and said polarization component therof in the direction normal to this prescribed direction, by said half-mirror (9), and $\eta$, $\eta_R$ and $\eta_T$ are integers.

2. An information reproducing apparatus according to claim 1, wherein $\eta_R = 1$ and $\eta_T = 0$.

3. An information reproducing apparatus according to claim 1, wherein the following relation is satisfied

$$(-\tfrac{1}{6} + \eta)\pi < \delta_S + \delta_M + \delta_Q < (\tfrac{1}{6} + \eta)\pi$$

4. An information reproducing apparatus according to claim 1, wherein said optical elements comprise a polarization beam splitter (3) for separating the modulated light beam from a light beam applied to the medium.

5. An information reproducing apparatus according to claim 1, wherein said reproducing circuit consists of a differential amplifier.

**Patentansprüche**

1. System zur Informationswiedergabe mit einer Vorrichtung, die einen in einer vorbestimmten Richtung polarisierten Lichtstrahl auf ein opto-magnetisches Aufzeichnungsmedium richtet, in dem sich Dünnfilme mit mindestens einer magnetischen Aufzeichnungsschicht (13), auf der Informationen aufgezeichnet sind, auf einem transparenten Substrat (11, 17) befinden; einem halbdurchlässigen Spiegel (9) zur Aufspaltung des durch einen magneto-optischen Effekt den Informationen entsprechend modulierten Lichtstrahls in einen durchgelassenen und einen reflektierten Lichtstrahl; optischen Elementen (3, 4, 6), die den modulierten Lichtstrahl zu dem halbdurchlässigen Spiegel leiten; zwei Analysatoren ($7_1$, $7_2$), deren Durchlaßachsen verschiedene Richtungen haben, jeweils zum Durchlaß der durchgelassenen und der reflektierten Lichtstrahlen; zwei Detektoren ($8_1$, $8_2$) jeweils zum Empfang der durchgelassenen und der reflektierten und durch die Analysatoren durchgelassenen Lichtstrahlen; und einer Wiedergabeschaltung (10) zur Bildung der Differenz der Ausgangssignale der beiden Detektoren, um die Informationen zu reproduzieren:
dadurch gekennzeichnet, daß folgende Beziehungen erfüllt sind

$$\delta_S + \delta_M + \delta_Q \sim n\pi$$
$$\delta_R = n_R\pi$$
$$\delta_T = n_T\pi$$

wobei $\delta_S$, $\delta_M$ und $\delta_Q$ jeweils von dem transparenten Substrat (11), den Dünnfilmen (13) und den optischen Elementen (3, 4, 6) erzeugte Phasendifferenzen zwischen einer Komponente des modulierten Lichtstrahls mit einer vorgeschriebenen Polarisationsrichtung und der Komponente, deren Polarisationsrichtung senkrecht dazu ist, sind, $\delta_R$ für eine von dem halbdurchlässigen Spiegel (9) erzeugte Phasendifferenz zwischen der Komponente des reflektierten Lichtstrahls mit der vorgeschriebenen Polarisationsrichtung und der Komponente, deren Polarisationsrichtung senkrecht dazu ist, steht, $\delta_T$ eine von dem halbdurchlässigen Spiegel (9) erzeugte Phasendifferenz zwischen der Komponente des durchgelassenen Lichtstrahls mit der vorgeschriebenen Polarisationsrichtung und der Komponente, deren Polarisationsrichtung senkrecht dazu ist, bezeichnet, und n, $n_R$ und $n_T$ ganze Zahlen sind.

2. Informationswiedergabegerät nach Anspruch 1, für das $n_R = 1$ und $n_T = 0$ gilt.

3. Informationswiedergabegerät nach Anspruch 1, für das folgende Beziehung erfüllt ist

$(-1/6 + n)\pi < \delta_S + \delta_M + \delta_Q < (1/6 + n)\pi$.

**4.** Informationswiedergabegerät nach Anspruch 1, bei dem die optischen Elemente einen Polarisationsstrahlenteiler (3) zur Trennung des modulierten Lichtstrahls von einem auf das Medium gerichteten Lichtstrahl beinhalten.

**5.** Informationswiedergabegerät nach Anspruch 1, bei dem die Wiedergabeschaltung aus einem Differenzverstärker besteht.

**Revendications**

**1.** Système de reproduction d'informations qui comporte des moyens destinés à appliquer un faisceau lumineux polarisé dans une direction prédéterminée à un support d'enregistrement opto-magnétique dans lequel des films minces comprenant au moins une couche d'enregistrement magnétique (13), ayant des informations enregistrées, sont formés sur un substrat transparent (11, 17) ; un demi-miroir (9) destiné à diviser le faisceau lumineux modulé en fonction de l'information par un effet magnéto-optique en un faisceau lumineux transmis et un faisceau lumineux réfléchi ; des éléments optiques (3,4,6) destinés à diriger le faisceau lumineux modulé sur ledit demi-miroir ; deux analyseurs (71, 72) ayant des orientations d'axe de transmission différentes pour transmettre les faisceaux lumineux transmis et réfléchi, respectivement ; deux détecteurs (81, 82) destinés à recevoir les faisceaux lumineux transmis et réfléchi, transmis à travers les analyseurs, respectivement ; et un circuit de reproduction (10) destiné à différentier les signaux de sortie desdits deux détecteurs pour reproduire l'information ;

    caractérisé en ce que les relations suivantes sont satisfaites

$$\delta_S + \delta_M + \delta_Q \sim \eta\pi$$
$$\delta_R = \eta_R\pi$$
$$\delta_T = \eta_T\pi$$

    où $\delta_S$, $\delta_M$ et $\delta_Q$ sont des différences de phases engendrées, entre une composante de polarisation du faisceau lumineux modulé dans une direction prescrite et une composante de polarisation de ce faisceau dans une direction normale à cette direction prescrite, par le substrat transparent (11), les films minces (13) et lesdits éléments optiques (3,4,6), respectivement, $\delta_R$ est une différence de phase engendrée, entre ladite composante de polarisation du faisceau lumineux réfléchi dans la direction prescrite et ladite composante de polarisation de ce faisceau dans la direction normale à cette direction prescrite, par ledit demi-miroir (9), $\delta_T$ est une différence de phase engendrée, entre ladite composante de polarisation du faisceau lumineux transmis dans la direction prescrite et ladite composante de polarisation de ce faisceau dans la direction normale à cette direction prescrite, par ledit demi-miroir (9), et $\eta, \eta_R$ et $\eta_T$ sont des entiers.

**2.** Appareil d'enregistrement d'informations selon la revendication 1, dans lequel $\eta_R = 1$ et $\eta_T = 0$.

**3.** Appareil de reproduction d'informations selon la revendication 1, dans lequel la relation suivante est satisfaite

$$(-\tfrac{1}{6} + \eta\,)\pi < \delta_S + \delta_M + \delta_Q < (\tfrac{1}{6} + \eta\,)\pi$$

**4.** Appareil de reproduction d'informations selon la revendication 1, dans lequel lesdits éléments optiques comprennent un diviseur (3) de faisceau à polarisation destiné à séparer le faisceau lumineux modulé d'un faisceau lumineux appliqué au support.

**5.** Appareil de reproduction d'informations selon la revendication 1, dans lequel ledit circuit de reproduction est constitué d'un amplificateur différentiel.

# FIG.1

21
P
22
20 26 27 28
23
24
5

# FIG.2

L
5
11
12
13
14
15
16
17

# FIG.3

# FIG.4

# FIG.5

# FIG.6

CARRIER LEVEL
(dB)

$\Delta C = -IdBm$

-60 -50 -40 -30 -20 -10  0  10 20 30 40 50 60

(deg)

PHASE DIFFERENCE $\delta$

# FIG.7A

(A)

PHASE DIFFERENCE [deg]

# FIG.7B

# FIG.8